(19) Europäisches Patentamt / European Patent Office / Office européen des brevets

(11) **EP 3 021 075 A1**

(12) **DEMANDE DE BREVET EUROPEEN**

(43) Date de publication:
**18.05.2016 Bulletin 2016/20**

(51) Int Cl.:
**G01B 21/20** (2006.01)   **B61K 9/08** (2006.01)
**E01B 35/00** (2006.01)

(21) Numéro de dépôt: **15194677.9**

(22) Date de dépôt: **16.11.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **17.11.2014  FR 1461093**

(71) Demandeur: **Leyfa Measurement**
**81012 Albi (FR)**

(72) Inventeurs:
• **FAURE, Julien**
  **81700 PUYLAURENS (FR)**
• **LEYMARIE, Alban**
  **31150 GAGNAC SUR GARONNE (FR)**

(74) Mandataire: **Ipside**
**6, Impasse Michel Labrousse**
**31100 Toulouse (FR)**

(54) **PROCÉDÉ DE CARACTÉRISATION DE TRACÉ PLAN ET PROFIL TRANSVERSAL D'UNE VOIE FERRÉE**

(57)   L'invention est relative à un procédé de mesure de tracé plan et profil caractérisation du tracé plan et profil transversal d'une voie ferrée et de la position de points obligés à la voie ferrée, pour la constitution de données d'entrée à un procédé de rectification de tracé de ligne de la voie ferrée, comportant les étapes de :
- obtention d'un diagramme de flèches représentatif du tracé plan de la voie ferrée à caractériser,
- identification et définition du ou des chaînages du diagramme de flèches,
- pour chaque chaînage défini, détermination d'un bornage théorique,
- pour chaque chaînage crée, représentation physique du bornage théorique sur la voie ferrée à analyser,
- mesure de flèches, de dévers et de distance le long du rail, couplée à une synchronisation spatiale du bornage et de points fixes rencontrés le long de la voie ferrée à analyser,
- mesure de distances horizontales L et verticales h de points obligés à la voie ferrée.

Fig. 2

EP 3 021 075 A1

**Description**

**Domaine de l'invention**

L'invention concerne le domaine de la maintenance des infrastructures ferroviaires, notamment la maintenance de la géométrie des voies ferrées.

L'invention concerne notamment un procédé de mesure du tracé plan et du profil transversal d'une voie ferrée et de mesure des distances verticales et horizontales des points obligés à ladite voie ferrée ainsi que de ladite voie ferrées à la (aux) voie(s) contigüe(s) destiné à constituer des données d'entrée aux études de rectification pour redéfinir un tracé de ladite voie ferrée.

**Etat de l'art**

La maintenance des voies ferrées se définit comme l'ensemble des opérations d'entretien et de renouvellement destiné à assurer une qualité optimale du matériel constituant la voie ferrée, c'est-à-dire le châssis de la voie (rails, attaches et traverses), le ballast et les couches de fondement et d'assises et de leur agencement constituant la géométrie de ladite voie

Au cours de la vie d'une voie ferrée, tant le châssis de la voie que le ballast -qui assure la transmission et la répartition des charges et surcharges verticales vers la plateforme, mais aussi la stabilité, les ancrages longitudinaux et latéraux du châssis de la voie et le drainage- sont soumis à des contraintes statiques et dynamiques, notamment due au trafic, aux intempéries et autres pollutions ou instabilités du sol qui amoindrissent leur qualité intrinsèque (propriétés) mais aussi leur agencement (géométrie voie). La voie ferrée s'use et se déforme. Les imperfections de cette dernière impacte la stabilité des véhicules roulants avec des conséquences importantes sur le confort des passagers voire sur la sécurité des circulations, d'où la nécessité de conserver une bonne qualité de la voie ferrée, tant de ses constituants que de sa géométrie

Les interventions d'entretien, notamment le contrôle de la géométrie de la voie ferrée, et les opérations de maintenance en découlant permettent de maintenir des conditions de circulation optimales, c'est-à-dire de construction, c'est-à-dire sensiblement identiques à celles définies lors de la pose de ladite voie ferrée. Ainsi la sécurité et le confort de circulation sur ces infrastructures ferroviaires sont assurés. Elles permettent également le recours raisonné aux opérations couteuses de renouvellement complet de la voie ferrée (remplacement des constituants du châssis et/ou du ballast).

Pour une infrastructure ballastée, les opérations de maintenance de la géométrie de la voie consistent en des opérations de nivellement et de dressage (selon que l'on maintienne le profil en long ou le tracé plan) par des techniques dites de relevage et de ripage effectuées soit manuellement, soit à l'aide d'outillages mécaniques, soit à l'aide d'engins.

Le contrôle et la correction de la géométrie de la voie ferrée en ce qui concerne le nivellement (variations autour du profil en long) se font par mesure du nivellement (pouvant se rapporter à une flèche dans le plan vertical) et par relevage lors d'opérations de bourrage. Le contrôle et la correction de la géométrie de la voie ferrée en ce qui concerne le tracé plan, sont généralement réalisés par mesure des flèches horizontales et par une méthode de rectification du tracé ou méthode des flèches, communément dénommée méthode Hallade et la correction de la géométrie est mis en oeuvre par une bourreuse-dresseuse.

Cette méthode Hallade consiste, de manière connue par l'homme du métier, à calculer exactement les déplacements transversaux, dits ripages, à faire subir à la voie ferrée. Elle nécessite comme paramètres d'entrée, la mesure de flèches et de dévers, et leurs localisations précises le long de la courbe de la voie ferrée.

Pour rappel, la flèche, en un point déterminé de la voie ferrée, par file de rail, représente la distance entre une corde (matérialisée ou non) et la courbe de la voie ferrée au milieu de la corde de longueur prédéfinie, généralement 20 m. La mesure de flèche met en avant les défauts de dressage et permet la description du tracé plan de la voie. La flèche est en effet proportionnelle à la courbure qui est l'inverse du rayon.

Le dévers représente la différence d'altitude entre les deux rails d'une voie ferrée. La mesure de dévers met en avant les défauts de nivellement transversal.

Historiquement, le relevé des flèches et des dévers était manuel, au moyen d'un cordeau pour la mesure de flèches et au moyen d'une règle à dévers pour la mesure de dévers. Des bornes implantées le long de ladite voie ferrée permettaient la localisation précise des relevés manuels de mesures. Les données étaient ensuite rassemblées dans des procès verbaux de récolement et des carnets de courbes et se présentaient sous la forme de tableaux avec l'indication des flèches et des dévers au droit de ces bornes.

Cependant, de nos jours, la correction du tracé des voies ferrées avec référence aux bornes n'est plus possible. En effet, d'une part les effectifs humains pour réaliser les relevés manuels des flèches et dévers le long des voies ferrées se sont réduits et d'autre part l'entretien des bornes représente un coût trop onéreux. Les bornes sont ainsi progressivement supprimées, rendant de ce fait les archives de données stockées dans les procès verbaux de récolement et les carnets de courbes inexploitables.

Historiquement, on a donc choisi une représentation de la géométrie de la voie ferrée quant à son tracé plan par les flèches, les flèches constituant une quantité proportionnelle à l'inverse du rayon de courbes. On considère la voie ferrée totalement décrite en absolu (non géoréférencée cependant, c'est-à-dire que la description n'est pas faite dans un repère géodésique) par la connaissance de la position, longueur des éléments de tracé, à travers la position de leurs extrémités de leur rayon et dévers établis en pleine courbe et de leurs variations respectives en raccordement progressif.

Un bornage était matérialisé à équidistance fixe (généralement 10m, mais d'autres valeurs existaient afin de conduire à une valeur de flèche entière, plus facile à relever, pour des rayons particuliers -notamment le rayon 3000m-) avec implantation de piquets de courbes ou bornes Hallade. La technique consistait en la pose de la voie, en un relevé de flèches et en une étude de rectification des flèches pour obtenir un tracé apte à des conditions de circulation bien précises, puis en l'implantation des bornes à une distance constante (généralement 1m), plus ou moins les valeurs de ripage à effectuer. Une fois celles-ci réalisées, on disposait donc d'une voie au tracé plan souhaité avec un bornage à équidistance fixe et situé à une distance fixe par rapport au rail le plus proche.

L'entretien de la géométrie de la voie en ce qui concerne le tracé plan se faisait donc en Base Absolue Stricte puisque la méthode de rectification permettait d'obtenir des ripages et garantissait à la fois le respect des caractéristiques du tracé mais aussi du positionnement de la voie par rapport aux éventuelles voies contigües et aux obstacles.

L'acte de maintenance courant se résumait donc :

- au relevé des flèches sur les pointes ou goupilles (c'est-à-dire au repère sur le piquet ou la borne) ; ces valeurs de flèches ne devant pas changer puisque le piquetage devait être immuable, une variation de flèches par rapport à l'épure initiale (c'est-à-dire aux données de conception) indiquait un déplacement non souhaité d'un ou de plusieurs repères ;
- à l'étude de rectification des repères du bornage ;
- à la rectification des repères par déplacement des clous ou goupille ;
- à la mise à la cote (généralement 1 m) de la voie.

Le mainteneur savait donc garantir le respect de la géométrie absolue : longueur, position des éléments de tracé, rayon et leur variation, soit les paramètres nécessaires au respect des conditions de circulation définies à la conception de la voie. Il savait aussi garantir l'absence de translation longitudinale ou latérale des courbes, qui, sans modifier les caractéristiques absolues du tracé (si elles s'exerçaient à l'échelle de toute la courbe), avaient en revanche un impact fort quant aux problématiques de gabarit admissibles.

Pour toutes ces raisons, la méthode de dressage avec référence au piquetage est considérée comme une méthode en base absolue en base stricte. Elle ne permet en revanche pas la géolocalisation de la voie, c'est-à-dire sa description dans un repère géodésique. Les changements d'orientation globaux, les différences de gisement, ne sont pas connus précisément.

Les méthodes de bourrage mécanique ayant intégré des mesures préparatoires de géométrie avant travail, on a cru aisément faisable et bien plus économique de supprimer le dressage avec référence au piquetage et de réaliser des opérations de maintenance par bourrage en base relative.

Il existe trois grands types de base de mesure pour l'entretien des voies : la base relative, la base absolue classique et la base absolue stricte.

Combinée à la disparition des bornes et donc à la perte de calage longitudinal (les carnets de courbes n'étaient dans leur grande majorité reliés qu'aux anciennes bornes), l'entretien en base relative -qui consiste en un lissage des défauts- a conduit à des déplacements de courbes, à des réductions de raccordements progressifs RP, à des désynchronisation flèches/ dévers.

La base absolue classique donne de meilleurs résultats et évite de générer de trop grands décalages mais ne permet pas de gérer les décalages latéraux et est tributaire de la connaissance de la position des origines du raccordement parabolique (ORP) / fin du raccordement parabolique (FRP), connaissance devenue de plus en plus problématique depuis la suppression du piquetage.

La base absolue stricte n'est plus aujourd'hui considérée qu'à travers des mesures de coordonnées et des méthodes topographiques, assez couteuses : nécessitant des machines spécialement équipées, la présence de supports caténaires et fonctionnant plutôt en des rayons assez élevés, elle ne constitue pas forcément un alternative totalement pertinente notamment pour le réseau classique.

## Exposé de l'invention

La présente invention a pour but de pallier aux inconvénients précédemment évoqués et notamment à la problématique de disparition des bornes et de la fin des méthodes d'entretien avec référence auxdites bornes.

Un objectif de la présente invention est de proposer un procédé destiné à répondre à un besoin croissant vis-à-vis de la problématique d'entretien et de rectification du tracé des voies ferrées. Un tel procédé permet avantageusement la pérennisation des interventions de correction de géométrie, opération de base de la maintenance de la voie ballastée, afin de conserver les paramètres de géométrie aptes aux conditions de circulation optimales, et notamment la grande vitesse.

Le procédé permet de réaliser des mesures justes et fidèles de la géométrie en plan (dressage) et du profil en travers (nivellement transversal) des courbes de la voie, des mesures du positionnement de points fixes par rapport à la voie, au travers de mesures de flèches, de dévers, de cotes L et h, c'est-à-dire de distance horizontales et verticales, et, associées à une localisation spatiale de haute précision pour permettre le recours à des méthodes de rectification de tracé de ligne telles que la méthode Hallade et garantir le respect de l'intégrité de la voie ferrée. Le procédé consiste également en une double localisation de la mesure : localisation des marquages effectués à une équidistance définie (généralement décamétrique) et localisation des points fixes (dont des points obligés) afin qu'ils puissent servir de référence externe. Dans le cas d'une plateforme à plusieurs voies ferrées, le procédé permet également de réaliser des mesures du positionnement de la voie ferrée par rapport à une ou plusieurs autres voies ferrées, au travers de mesure de cotes $E_m$, c'est-à-dire entraxe horizontal, et Z, c'est-à-dire différence d'altitude, entre files hautes de deux voies ferrées distinctes.

Selon l'invention, un procédé de caractérisation de tracé plan et profil transversal d'une voie ferrée et de position des points obligés à la voie, pour la constitution des données d'entrée à un procédé de rectification de tracé de ligne de la voie ferrée, comporte les étapes de :

- obtention d'un diagramme de flèches représentatif du tracé plan de la voie ferrée à caractériser, ou a minima représentatif de la développée des courbes et distances entre elles,
- identification et définition du ou des chaînages du diagramme de flèches,
- pour chaque chaînage défini, détermination d'un bornage théorique,
- pour chaque chaînage, représentation physique du bornage théorique sur la voie ferrée à analyser,
- mesure de flèches, de dévers et de distance le long d'un rail, couplée à une synchronisation spatiale du bornage et de points fixes rencontrés le long de la voie ferrée à analyser.
- Mesure, préférentiellement simultanément aux mesures de flèches et dévers, de distances horizontales, dites cotes L, et verticales, dites cotes h, de points obligés à la voie ferrée, par exemple à la face interne du rail le plus proche.

Un point fixe se définit comme un élément fixe sur ou proche de la voie ferrée et immuable, tel que par exemple un support caténaire. Un point obligé est un point fixe particulier qui se définit comme un élément fixe proche de la voie ferrée et qui présente un impact pour le respect du gabarit d'un véhicule roulant circulant sur la voie ferrée.

La flèche est le paramètre décrivant le tracé plan. Le dévers est le paramètre décrivant le profil transversal.

Les cotes L et h décrivent le positionnement des points obligés par rapport à la voie ferrée.

Le bornage est représenté par une pluralité de bornes espacées de manière équidistante.

Le procédé permet ainsi l'obtention de données géométriques relatives à la voie ferrée, telles que les flèches et les dévers, les cotes L et h, pour l'ensemble des bornes représentées et les points fixes.

Les mesures des cotes L, et h sont préférentiellement réalisées simultanément aux mesures de flèches et dévers.

Un tel procédé, via la création d'un nouveau bornage représenté sur la voie ferrée, permet avantageusement de s'affranchir de la disparition de l'ancien bornage.

Ce nouveau bornage présente également l'avantage de servir à l'implantation d'un chantier, à l'exécution des ripages aux bornes, et au récolement. En effet, les valeurs de flèches, dévers, avant le chantier, l'étude et après le chantier sont comparées au droit de ces bornes et des points fixes.

Un tel procédé présente également l'avantage de ne pas bouleverser les procédés traditionnels de rectification de tracé, par exemple par la méthode des flèches, et donc d'en conserver tous les bénéfices notamment vis-à-vis de leur capacité à permettre l'atteinte d'objectifs de positionnement avec les remaniements les plus faibles possibles de la voie ferrée, tout en garantissant que la voie ferrée reposée et rectifiée se raccordera à ses extrémités. Par ailleurs, les valeurs relevées de flèches et de dévers sont aisément compréhensibles par tous les acteurs ayant toujours pratiqué le relevé manuel et les mesures relatives et vérifiables immédiatement avec un cordeau.

Un tel procédé présente également l'avantage de fournir avec précision les caractéristiques des éléments de tracé : position, longueur de développement des raccordements progressifs, pleines courbes, valeurs des rayons.

Un tel procédé présente également l'avantage de permettre la rectification des courbes dont les extrémités des éléments de tracé ont été fortement décalées et/ ou pour lesquelles d'importants « coup de tracé », c'est-à-dire défaut de tracé sont à lisser aux extrémités des courbes.

Suivant des modes en oeuvre préférés, l'invention répond en outre aux caractéristiques suivantes, mises en oeuvre séparément ou en chacune de leurs combinaisons techniquement opérantes.

Dans des modes de mise en oeuvre préférés, l'étape de représentation physique du bornage théorique sur la voie ferrée à analyser, comporte une phase avec d'adaptation de la position théorique des bornes pour respecter des contraintes destinées à assurer la pérennité du chaînage dans le temps. En d'autres termes, cela signifie que l'on référence doublement les bornes, l'une par rapport à l'autre avec une équidistance constante, mais aussi en prenant soin de placer une borne initiale face à une référence externe fixe et de coter les bornes suivantes par rapport aux références externes fixes (telles que les points fixes de la voie ferrée.

Un tel procédé, via la création d'un nouveau bornage représenté sur la voie ferrée, permet avantageusement de s'affranchir de la disparition de l'ancien bornage mais permet surtout de s'affranchir de tous risques de disparition totale et de perte globale de la localisation des courbes puisque la borne initiale a été positionnée face à un point fixe et que la distance des bornes est connue par rapport à des supports fixes

On s'abstient ainsi de raisonner en termes de Points Kilométriques, dits PK, toujours très difficiles à définir et dont le caractère absolu n'est pas garanti (le PK est forcément défini par rapport à une référence en PK, ce genre de description est cumulative d'erreur d'une part à cause de la dérive naturelle des mesures odométriques, d'autre part à cause de l'incertitude sur la position des pancartes hectométriques et kilométriques dont l'implantation n'est pas inviolable et qui ne sont pas localisés par rapport à des points fixes réellement immuables.) Ainsi, le chainage défini et implanté ainsi que les mesures qui y sont reliées sont décrits de manière non équivoque et on est assuré de leur pérennité.

Les points fixes, dont les points obligés, sont donc synchronisés spatialement aux relevés, servent de calage en référence externe pour les bornes matérialisant le nouveau chaînage et sont connus également d'un point de vue position latérale et verticale par rapport à la voie ferrée.

Dans des modes de mise en oeuvre préférés, le procédé comporte une étape ultérieure de mise en forme des mesures dans un formalisme compatible avec tous les procédés de rectification de tracé de ligne de la voie ferrée.

De préférence, les données sont mises en forme pour respecter le formalisme pour le procédé de rectification de tracé selon la méthode Hallade. Ladite méthode permet la rectification du tracé avec respect des normes de conception du tracé. La méthode détermine selon les normes de conception, des éléments de tracé : rayons et leur variation longueur et positions des raccordements progressifs (RP) et des pleines courbes (PC). Elle permet de respecter les contraintes gabarit. En d'autres termes, c'est une méthode d'optimisation sous contraintes.

Dans des modes de mise en oeuvre préférés, les mesures sont réalisées à partir d'un dispositif de mesure unique mesurant en continu, et préférentiellement en temps réel, les flèches, les dévers, les distances parcourues le long du rail, les cotes L et h, avec une synchronisation spatiale, préférentiellement odométrique, du bornage et des points fixes.

Dans des modes de mise en oeuvre préférés, lorsque la voie ferrée fait partie d'une plateforme à plusieurs voies ferrées, le procédé comporte une étape de mesure des entraxes, dites cotes $E_m$, et des différences d'altitudes, dites cotes Z, entre files hautes de la voie ferrée à analyser et une(des) voie(s) ferrée(s) contigüe(s) distinctes.

La cote $E_m$ décrit la distance horizontale entre les deux files hautes.

Les mesures des cotes $E_m$ et Z sont préférentiellement réalisées simultanément aux mesures de flèches et dévers.

Dans des modes de mise en oeuvre préférés, les mesures sont réalisées à partir d'un dispositif de mesure unique mesurant en continu, et préférentiellement en temps réel, les flèches, les dévers, les distances parcourues le long du rail, avec une synchronisation spatiale, préférentiellement odométrique, du bornage et des points fixes mais aussi en mesurant respectivement au droit des bornes et des points obligés, respectivement les cotes $E_m$, Z, et I et h.

Le relevé de la géométrie de la voie par un tel dispositif de mesure associé au procédé de mesure selon l'invention permet de garantir avantageusement un haut rendement et une restitution rapide des données.

Dans des exemples de mise en oeuvre, le dispositif de mesure est choisi de sorte à permettre la mesure des flèches et des devers en continu, et un assurer un calage longitudinal, élément essentiel de la mesure, par une mesure odométrique couplée à la synchronisation spatiale des bornes du nouveau chaînage préalablement implantées avec une équidistance prédéfinie, mis aussi des points fixes. Ainsi, le risque de dérive est éliminé et une garantie est donnée que les valeurs mesurées sont bien données au droit d'une borne, connue par rapport à un point fixe inviolable et facilement utilisable en chantier.

Dans des modes de mise en oeuvre préférés, le diagramme des flèches estimatif du tracé de la zone à relever et étudier est obtenu à partir d'une base de données existante.

Dans des modes de mise en oeuvre préférés, la représentation physique du bornage est réalisée par un marquage sur un rail de la voie ferrée, notamment dans une âme dudit rail.

L'invention concerne aussi un procédé de renouvellement du tracé plan, notamment dans le cadre des Grandes Opérations Programmées, de type Suite Rapide ou Hors Suite, mettant en oeuvre un procédé de caractérisation selon au moins l'un de ces modes de mise en oeuvre et comportant une étape de fourniture, par exemple à un gestionnaire du réseau ferré ou mainteneur, en fin d'opération de renouvellement, d'une nouvelle base de données, de préférence unique, comportant les valeurs de flèches base 20m, les dévers, au droit de bornes nouvellement définies ainsi que les distances horizontales L et verticales h des points obligés à la file de rail la plus proche avec synchronisation spatiale des valeurs avec les points fixes en vue de servir de référence pour les rectifications de tracé dans le cadre d'une maintenance. Dans le cas d'une plateforme à plusieurs voies ferrées, l'étape de fourniture procure une nouvelle base de données comportant en outre les valeurs des entraxes et différence d'altitude des fils hautes au droit des bornes nouvellement définies.

## Présentation des figures

L'invention sera maintenant plus précisément décrite dans le cadre de modes de réalisation préférés, qui n'en sont nullement limitatifs, représentés sur les figures 1 à 4, lesquelles représentent :

Figure 1, une représentation d'un diagramme de flèches d'un tracé de ligne d'une voie ferrée,
Figure 2, une vue schématique d'une plateforme à deux voies ferrées,
Figure 3, une autre vue schématique d'une plateforme à deux voies ferrées,
Figure 4, un exemple illustratif des relevés de flèches et de dévers pour deux voies d'une plateforme à plusieurs voies ferrées, ainsi que la représentation des différents points fixes sur le tracé de ligne analysé.

## Description détaillée de l'invention

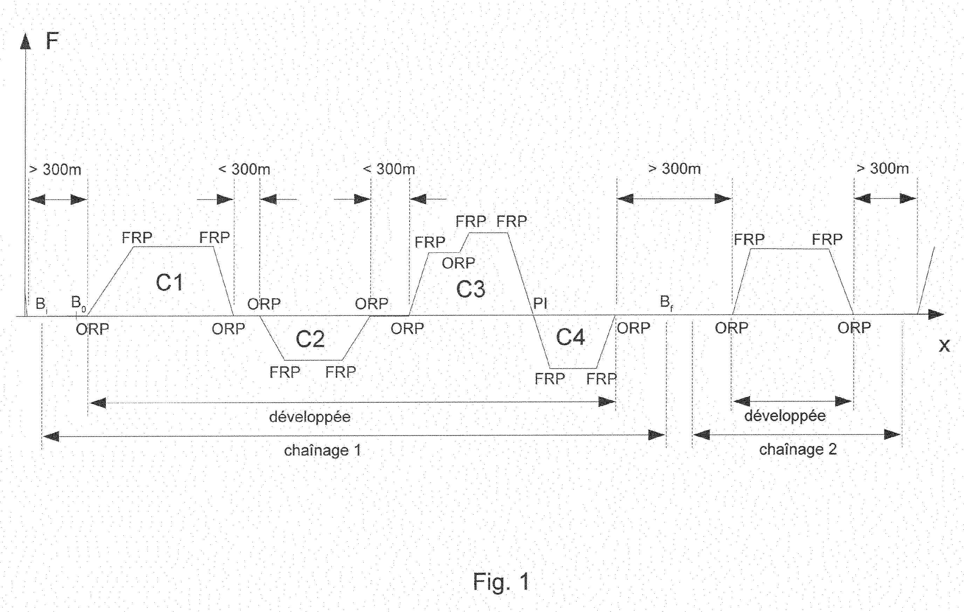

Un exemple de réalisation d'un procédé de mesure destiné à fournir des mesures constituant des données d'entrées aux études de rectification de tracé de ligne d'une voie ferrée suivant un mode de mise en oeuvre de l'invention est à présent décrit de manière détaillée et illustrée par la figure 1.
L'invention est décrite dans le cas de son application à une voie de circulation d'un réseau à double rails. Mais l'invention est également applicable à tout types de voies de circulation, notamment ceux à rail unique.
Un tracé de ligne en plan d'une voie ferrée se compose de courbes et d'alignements, le long d'un axe curviligne X.
Ce tracé de ligne peut également se représenter sous la forme d'un diagramme de flèches telle qu'illustré sur la figure 1, le long de l'axe curviligne X.
Le diagramme de flèches se définit par différents points, représentés sur la figure 1 :

- une Origine du Raccordement Parabolique (ORP) ; elle correspond à l'extrémité du raccordement progressif RP situé du côté du plus grand rayon ;
- une Fin du Raccordement Parabolique (FRP) ; elle correspond à l'extrémité du raccordement progressif situé du côté du plus petit rayon ;
- un Point d'Inflexion (PI).

Le procédé de mesure se décompose en plusieurs étapes successives.
Dans une étape dite préalable, le diagramme de flèches pour le tracé de ligne à analyser est obtenu. Ce diagramme est estimatif, il n'est pas nécessaire d'obtenir une description précise des éléments de tracé, ceci faisant l'objet du procédé selon l'invention, on cherche seulement à connaitre essentiellement le début/ fin des courbes et donc la longueur des alignements les séparant. Le sens et le rayon sont secondaires à cette étape du procédé.
Un moyen pour mettre en oeuvre cette étape préalable consiste, par exemple, à reprendre le diagramme des flèches antérieurement relevées et stocké dans une base de données existante, lorsque celle-ci existe. On peut également utiliser le schéma de tournée décrivant sans précision le tracé plan, l'armement de la voie, le profil en long et contenu aussi dans une base de données existante.
Un autre moyen pour mettre en oeuvre cette étape préalable, lorsqu'aucune base de données n'est disponible, consiste, par exemple, à effectuer une mesure continue de flèches sur la ligne, au moyen par exemple d'un dispositif de mesure de flèches.
Dans une première étape, des chaînages sont définis par rapport au diagramme de flèches décrivant la position des courbes.
Par chaînage, on entend une discrétisation spatiale avec équidistance fixe regroupant une ou un ensemble de courbes séparées entre elles soit par un point d'inflexion PI soit par un alignement entre deux ORP d'une distance suffisamment grande, par exemple 300m.
Une courbe se définie comme comprise entre :

- deux ORP et deux raccordements progressifs, ou
- un ORP et un point d'inflexion PI, ou
- un point d'inflexion PI et un ORP.

Dans l'exemple de la figure 1, deux chaînages sont définis, dénommés respectivement chaînage 1 et chaînage 2.

Dans l'exemple de la figure 1, quatre courbes C1, C2, C3, C4 sont représentées dans le chaînage 1 et une courbe dans le chaînage 2.

A l'issue de cette première étape, les courbes à regrouper au sein d'un même chaînage sont identifiées.

Dans une deuxième étape du procédé, pour chaque chaînage, un bornage théorique du chaînage est déterminé.

Dans une première phase, on détermine le positionnement du premier ORP.

En d'autres termes, la distance de l'ORP par rapport à un point localisé situé à proximité est déterminée.

Toutes les extrémités des éléments de tracé : ORP, FRP, PI dont il est question dans la description du procédé correspondent aux anciens ORP/ FRP/ PI, c'est-à-dire à ceux de l'ancienne épure, ils peuvent avoir été déplacés à cause du mouvement des courbes liés notamment à la maintenance. La mention de ces ORP/ FRP/ PI n'est faite que pour situer les longueurs de développement des courbes et leur positionnement, de manière approximative, afin de définir de manière cohérente les nouveaux chaînages.

Par point localisé, on entend un point qui puisse permettre de situer avec une assez bonne précision absolue, cela peut être un point kilométrique PK estimatif ou une distance par rapport à un repère aisément identifiable sur le terrain.

Un moyen pour mettre en oeuvre cette première phase consiste, par exemple, lorsqu'un relevé de flèches sur le terrain est réalisé pendant l'étape préalable, à enregistrer, simultanément au relevé de flèches, un relevé de localisation sur la voie ferrée. Dans un exemple préféré, le relevé de localisation sur la voie ferrée est obtenu par un capteur odométrique, par exemple positionné sur le dispositif de mesure de flèches. Le capteur odométrique permet la mesure d'une distance parcourue sur la voie ferrée par le dispositif de mesure.

Dans un mode de mise en oeuvre préféré, les relevés de flèches et de localisation sont réalisés en temps réel, et simultanément, au moyen du dispositif de mesure décrit dans la demande de brevet FR 14 50897 du demandeur.

D'autres moyens pour mettre en oeuvre cette première phase sont également envisageables, tels que par exemple le recours à la base de données lorsqu'elle est disponible.

Cette phase visant à estimer le début des courbes, la distance entre elles et leurs développées, on peut se satisfaire de ces uniques informations.

D'autres moyens pour mettre en oeuvre cette première phase sont également envisageables, tels que par exemple le recours aux informations du schéma de tournée ou descriptifs chantier de la base de données, lorsqu'elle est disponible.

Dans une deuxième phase, on positionne théoriquement une borne $B_0$, en amont du premier ORP, à une distance prédéterminée, au niveau de l'alignement.

Ce premier ORP est choisi de sorte à correspondre soit à l'ORP théorique de l'ancienne épure, c'est-à-dire de l'ancienne description, soit à l'ORP défini par assimilation au point kilométrique PK de début de courbe figurant dans les schémas de tournée ou descriptifs chantier.

La distance prédéterminée est de préférence choisie de telle sorte qu'au niveau de la borne $B_0$, on ait un dévers et une flèche nuls. En effet, au niveau du premier ORP (et de tout ORP), en raison de la présence de doucines, les flèches et dévers ne sont pas totalement nuls.

Dans l'ensemble de la description, en un point de la voie ferrée considérée, le terme amont désigne la partie de la voie ferrée qui est située avant le point considéré, selon l'axe curviligne X, et le terme aval, la partie de la voie ferrée qui est située après le point considéré.

Dans un exemple de mise en oeuvre, la borne $B_0$ est positionnée théoriquement à une distance de 40 m du premier ORP, en amont dudit premier ORP.

Dans une troisième phase, on positionne théoriquement un nombre défini de bornes en amont de $B_0$, à partir de $B_0$, toutes équidistantes entre elles. Lesdites bornes sont positionnées théoriquement au niveau de l'alignement.

La borne la plus éloignée en amont de $B_0$, dite borne initiale $B_i$, définit la première borne du chaînage.

Dans un exemple de mise en oeuvre, quinze bornes équidistantes sont positionnées en amont de $B_0$.

Dans un exemple de mise en oeuvre, les bornes sont équidistantes entre elles de 10m. Ainsi, lorsque 15 bornes sont positionnées, la borne initiale $B_i$, est située à 150m en amont de $B_0$. Le numéro de la borne $B_i$ est -15, et celui de la borne $B_0$ est 0.

Dans une quatrième phase, on détermine théoriquement le nombre de bornes équidistantes sur le chaînage.

Un moyen pour mettre en oeuvre cette cinquième phase consiste, par exemple, à déterminer le positionnement de la borne la plus éloignée en aval de $B_0$, dite borne finale $B_f$. Le chaînage est ainsi délimité entre $B_i$ et $B_f$.

La borne finale $B_f$ est définie par la relation :

$$n°_{B_f} = n°_{B_i} + \frac{développée + 2 * marge}{valeur\ égale\ à\ l'équidistance\ entre\ deux\ bornes}$$

Par développée, on entend la longueur de la courbe ou des courbes faisant l'objet du chaînage. En d'autres termes, si le chaînage comporte plusieurs courbes comme pour le chaînage 1, la développée correspond à la longueur entre le premier ORP de la première courbe du chaînage et le dernier ORP de la dernière courbe. Si le chaînage comporte une seule courbe comme pour le chaînage 2, la développée correspond à la longueur entre le premier ORP et le dernier ORP de ladite courbe.

Par marge, on entend une longueur de sécurité destinée à tenir compte du décalage longitudinal éventuel de la courbe causé par des méthodes d'entretien précédentes et destiné à tenir compte de l'incertitude existant vis-à-vis de la développée des courbes. Cette marge est à ajouter au début et à la fin du chaînage, d'où le terme multiplicatif 2 dans la relation précédente.

Le $n°_{Bf}$ correspond au numéro de la borne $B_f$ et le $n°_{bi}$ correspond au numéro de la borne $B_i$.

Le quotient (résultat de la division) est arrondi à l'entier supérieur.

Dans l'exemple de mise en oeuvre où les bornes sont équidistantes entre elles de 10m, la développée est de 1005m, et la marge est de 150m, on obtient à un quotient égal à 130 m. Si la borne $B_i$ est la borne n°-15, alors la borne $B_f$ est la borne n° 115.

A l'issue de cette deuxième étape, un bornage théorique du tracé, pour chaque chaînage, avec un nombre défini théorique de bornes équidistantes, est crée.

Dans une troisième étape, pour chaque chaînage, une implantation sur le terrain des bornes est réalisée. Cette implantation est réalisée en respectant la contrainte du positionnement de la $B_i$ face à un point fixe.

Dans une première phase, on adapte en pratique, sur le terrain le chaînage théorique de sorte que la borne initiale $B_i$ tombe au droit d'un point fixe situé le long de la voie ferrée.

Par point fixe, on entend un élément sur ou proche de la voie ferrée et immuable, tel que par exemple un support caténaire SC, un talon ou une pointe d'un appareil de voie, une entrée ou une sortie d'un ouvrage d'art (pont,...).

L'adaptation du chaînage consiste à translater l'ensemble des bornes positionnées lors de la phase précédente, selon l'axe curviligne X, de sorte à faire correspondre le positionnement de la borne initiale $B_i$ au droit d'un point fixe le plus proche, le long de la voie ferrée. La translation de l'ensemble des bornes est réalisée dans une fourchette comprise entre 0, exclu, et une valeur, non incluse, égale à l'équidistance entre deux bornes. Cette adaptation du chaînage entraîne une translation en amont ou en aval de la borne initiale $B_i$.

Un moyen pour mettre en oeuvre cette quatrième phase consiste, par exemple, lorsque la translation, en amont ou en aval de la borne initiale $B_i$, est supérieure à la valeur égale à l'équidistance entre deux bornes, à supprimer ou à ajouter une ou des bornes jusqu'à ce qu'il soit possible de translater l'ensemble des bornes dans la fourchette considérée.

Dans l'exemple de mise en oeuvre où les bornes sont équidistantes entre elles de 10m, la translation des bornes n'est possible qu'entre 0 et 10m exclus. Si la borne $B_i$ est à 14 m en amont d'un support caténaire, une nouvelle borne est ajoutée et renommée $B_i$ qui sera positionnée théoriquement à 4m du support caténaire. Une translation de l'ensemble des bornes de 4m est réalisée pour faire correspondre le positionnement de la nouvelle borne $B_i$ au droit du support caténaire. Si la borne $B_i$ est à 14 m en aval d'un support caténaire, la borne $B_i$ est supprimée et la borne précédente, à présent renommée $B_i$, est positionnée à 4m du support caténaire. Une translation de l'ensemble des bornes de 4m est réalisée pour faire correspondre le positionnement de la nouvelle borne $B_i$ au droit du support caténaire.

Dans une seconde phase, une matérialisation physique du bornage est réalisée sur la voie ferrée, à partir du bornage théorique. L'ensemble des bornes entre $B_i$ et $B_f$ est matérialisé.

Un moyen pour mettre en oeuvre cette troisième étape consiste, par exemple, à effectuer un marquage de chaque borne sur le rail en lui-même, au moyen par exemple d'un marquage à la peinture ou tout autre moyen équivalent tel qu'un rainurage. Préférentiellement, le marquage est réalisé au niveau d'une âme du rail.

Dans un premier temps, la borne $B_i$ est matérialisée au droit du point fixe choisi situé le long de voie ferrée.

Dans un deuxième temps, les bornes suivantes, jusqu'à $B_f$, sont matérialisées les unes après les autres, en les espaçant de l'équidistance prédéfinie.

A l'issue de cette troisième étape, un bornage physique est recrée sur la voie ferrée. Un tel bornage est destiné à permettre, simultanément à un enregistrement des mesures de flèches et dévers le long de la voie ferrée, la localisation de ces enregistrements, afin de constituer les données d'entrée aux études de rectification de tracé de ligne.

Dans une quatrième étape, pour chaque chaînage, une série de mesures est enregistrée. La géométrie de la voie ferrée, c'est-à-dire les flèches, les dévers, l'odométrie et le calage odométrique de l'ensemble des points fixes rencontrés et des bornes matérialisées lors de l'étape précédente, est enregistrée en continu. Une mesure de distances verticales, dites cote h, et horizontales, dites cotes L, des points fixes et obligés à la voie est également effectuée au droit de ces points, préférentiellement de manière simultanée à la mesure des flèches et dévers.

Par continu, on entend que l'échantillonnage des mesures est très inférieur à l'équidistance entre 2 bornes, préférentiellement de l'ordre de 1 pour 20.

Lorsqu'il existe au moins deux voies contiguës, une mesure d'entraxes $E_m$ et différences d'altitude Z entre files hautes est également effectuée au droit de ces points, préférentiellement de manière simultanée à la mesure des flèches et dévers, cotes h et L.

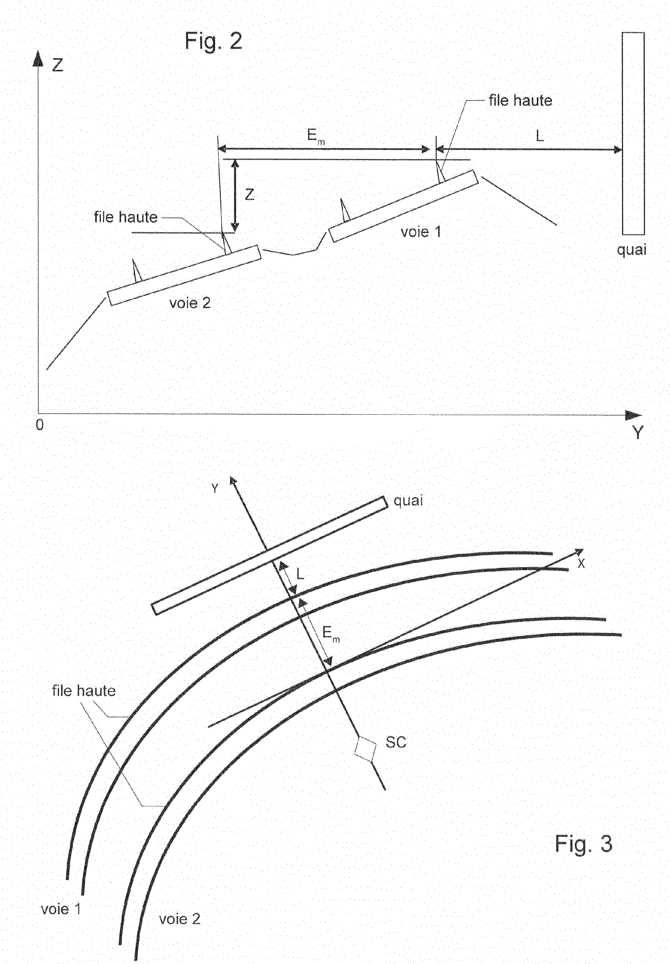

Les cotes L, $E_m$ et Z sont illustrées, à titre indicatif, sur les figures 2 à 4, pour un exemple de plateforme à deux voies.

Un moyen pour mettre en oeuvre cette quatrième étape consiste, par exemple, à faire circuler sur la voie ferrée un unique dispositif de mesure comportant des moyens de mesure spécifiques aptes à enregistrer, de manière simultanée, des flèches, des dévers et la localisation du dispositif de mesure à chaque enregistrement.

Dans un exemple de mise en oeuvre, le relevé de flèches est obtenu au moyen de capteurs de déplacement linéaire. Le relevé de dévers est obtenu au moyen d'un inclinomètre. La localisation est obtenue au moyen d'un capteur odométrique.

Dans un mode de mise en oeuvre, les relevés de flèches, de dévers et d'odométrie sont réalisés au moyen d'un dispositif de mesure apte à sortir des flèches sur une base de mesure quelconque (base de mesure 15m, base de mesure 20m, base de mesure allongée,...) pour permettre l'application de toute méthode ultérieure d'étude de rectification de tracé.

Dans un exemple de mise en oeuvre, les relevés de flèches, de dévers et d'odométrie sont réalisés à partir d'un dispositif de mesure apte à sortir des flèches base 20m qui permettent d'appliquer la méthode Hallade pour l'étude de rectification de tracé.

Dans un mode de mise en oeuvre préféré, les relevés de flèches, de dévers et d'odométrie sont réalisés en temps réel au moyen du dispositif de mesure décrit dans la demande de brevet FR 14 50897 du demandeur.

Dans un mode de mise en oeuvre préféré, les relevés des cotes L et h des points fixes et obligés sont réalisés en temps réel au moyen du dispositif de mesure décrit dans la demande de brevet FR 14 50897 du demandeur, augmenté d'un dispositif doté d'un distancemètre et d'un codeur angulaire ou associé à un dispositif équivalent afin d'obtenir l'ensemble des valeurs nécessaires pour coter la position de ces dits points fixes et obligés par rapport à la voie.

A l'issue de cette quatrième étape, l'ensemble de mesures relevées est stocké dans un tableau récapitulant :

- la distance parcourue,
- les points fixes et les bornes, selon la distance parcourue,
- les flèches, selon la distance parcourue,
- les dévers, selon la distance parcourue,
- Les cotes L et h au droit des points fixes,
- Les entraxes $E_m$ et différences d'altitude Z entre files hautes pour chaque borne, s'il existe au moins 2 voies contiguës.

Un tel tableau permet de connaître la position relative de chaque borne par rapport à tous les points fixes est connue.

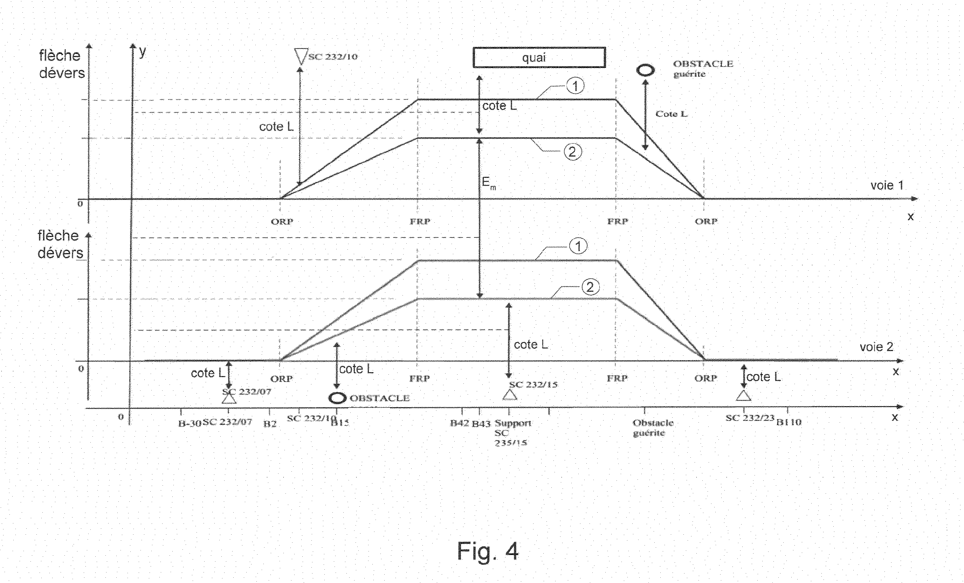

A titre illustratif, la figure 4 illustre un exemple de relevés de flèches et de dévers pour deux voies ferrées d'une plateforme, ainsi que la représentation des différents points fixes (obstacle, obstacle guérite, quai, guérite, supports caténaires SC232/07, SC232/10, SC232/15, SC232/23) et leurs cotes sur le tracé de ligne analysé. Les bornes implantées $B_{-30}$, $B_2$, $B_{15}$, $B_{42}$, $B_{43}$, $B_{110}$ sont également représentées. La courbe 1 de chaque voie ferrée est représentative des dévers mesurés et la courbe 2 est représentative des flèches mesurées sur base 20m.

Les valeurs de L et $E_m$ sont mesurées dans un même référentiel et sont reportées selon l'axe Y.

Dans une cinquième étape, pour chaque chaînage, les mesures sont mises en forme dans un formalisme compatible avec toutes méthodes d'étude de rectification de tracé.

Les mesures sont mises en forme suivant la longueur de la base de mesure et le type de symétrie/d'asymétrie que souhaite les méthodes d'études de rectification de tracé, tel que par exemple la méthode Hallade, ou pour les méthodes dites des 3 points ou des 4 points.

Dans un exemple de mise en oeuvre, lorsque la méthode d'étude d'études de rectification de tracé est la méthode Hallade, les mesures sont mises en forme selon une base de mesure 20m symétrique.

Dans un exemple de mise en oeuvre, la mise en forme consiste à extrapoler les flèches sur une base de mesure 20m (pour l'utilisation ultérieure de la méthode Hallade), à sélectionner la file de grand rayon, à échantillonner à nouveau le relevé de mesures pour obtenir une valeur au droit de chaque borne et de chaque point fixe.

A l'issue de cette étape, un tableau récapitule les variables suivantes, par exemple dans plusieurs colonnes :

- points fixes, bornes,
- les flèches, pour chaque point fixe et borne,
- les dévers, pour chaque point fixe et borne,
- les cotes L et h pour chaque point fixe,
- les entraxes $E_m$ et différence d'altitude Z des files hautes pour chaque borne, s'il existe au moins deux voies contiguës,
- les points kilométriques estimatifs, pour chaque point fixe et borne,
- l'odométrie, pour chaque point fixe et borne.

La colonne point kilométrique estimatif présente uniquement la colonne odométrie en y ajoutant un offset correspondant à un PK supposé connu d'un des points fixes topés et dont l'odométrie et donné. Il ne sert que pour afficher les différences de distance entre des points fixes ou entre une borne et un point fixe. Elle permet de connaitre la position d'une borne par rapport à un point fixe sur lequel est portée une indication kilométrique, tel que par exemple une pancarte kilométrique. Elle sert au pré repérage global et non affiné sur la voie.

A l'issue de cette cinquième étape, les valeurs stockées dans le tableau servent de données d'entrée à un logiciel permettant l'étude de rectification de tracé. Un tableau de ripage au droit des bornes est obtenu en sortie du logiciel. Pour chaque borne est associée une valeur numérique de ripage, qui peut être nulle, positive ou négative.

Une fois le tableau de ripages obtenu par le logiciel, une bourreuse-dresseuse exécute les ripages au droit des bornes matérialisées sur les rails de la voie ferrée pour corriger la géométrie de la voie ferrée.

L'invention vise à permettre d'obtenir les données nécessaires aux méthodes de rectification de tracé, avec haute précision tout en garantissant la localisation fine de la courbe de voie ferrée et de ses bornes. L'invention est avantageusement applicable sur des courbes de voie ferrée pour lesquelles toutes les archives documentaires ont été perdues et ou des courbes ayant subi potentiellement des modifications profondes non souhaitées du fait des méthodes d'entretien précédentes.

La détermination d'un nouveau bornage est également avantageuse pour la suite de la vie de la voie ferrée. Du fait de la connaissance des positions des bornes, leurs positions par rapport à des points fixes externes existants et immuables sont également connues. Ainsi, l'entretien de la voie peut être réalisé aisément en base absolue classique par ripage au droit des bornes avec la garantie de retrouver facilement la position de ces bornes, même si le marquage a disparu pour certaines. Il en est de même pour les bourrages en automatique, puisque la position des ORP/FRP nouveaux (c'est-à-dire issus de la nouvelle étude visant à constituer une nouvelle épure à partir des données obtenues par application du procédé décrit) sera parfaitement déterminée par rapport aux nouvelles bornes, elle-même localisées par rapport à des points fixes externes. Les OPR/FRP nouvellement déterminés resteront connus grâce à la persistance des points fixes, donc même si les marques de bornage ont disparu.

De plus, les cotes L et h et $E_m$ et Z étant mesurées au droit des points obligés et des bornes, et pris en compte dans l'étude de rectification du tracé, les nouvelles valeurs à l'issue des ripages de voie sont connues. On peut ainsi surveiller le positionnement de la voie ferrée et garantir au moins qu'il n'existe pas de translation selon un axe des ordonnées de la voie ferrée. Si une telle translation, appliquée à toute la courbe existait, elle pourrait être indétectable si un ripage constant était appliqué à chaque valeur de flèches, mais elle serait nécessairement identifiée car cela conduirait à des évolutions des cotes L et h, voire $E_m$ (si au moins une double voies).

Le procédé permet avantageusement la maintenance future du tracé. En effet, la principale difficulté liée à la perte de calage longitudinal du tracé est résolue, même dans le cas où le marquage au rail viendrait à s'affaiblir ou disparaître ponctuellement (remplacement de rail par exemple). La position des bornes étant connue par rapport à des points fixes, dont les points obligés inviolables, il sera possible de les réimplanter pour l'opération de maintenance. Il n'y a nul besoin de marquer à nouveaux toutes les bornes.

Dans le cadre de la maintenance, il suffit de réaliser un enregistrement continu des flèches, dévers, cotes L et h, mesure de distance, cotes $E_m$ et Z (si au moins une double voies) et toper les points fixes. On pourra ensuite, par connaissance de la position des matéralisations/implantations qui avaient été faites par rapport à des points fixes, extraire les valeurs numériques au droit de ses bornes, même si leur marquage a disparu.

L'étude de rectification est conduite de manière classique pour obtenir les valeurs de ripages au droit de bornes. La distance de la borne aux points obligés est également vérifiée. Puis le marquage est à nouveau restauré, préférentiellement uniquement pour les bornes où un ripage sera à réaliser..

En contrôlant les cotes L et h, on s'assure de l'absence de translation latérale de l'ensemble de la courbe et on est à même de donner les contraintes nécessaires à la méthode de rectification du tracé pour remettre la voie à sa place. En contrôlant, par exemple la cote L au droit des supports caténaire SC et les valeurs de flèches au droit des bornes, on peut régulariser les flèches, et maintenir l'épure créée lors de l'application du procédé faisant l'objet de la présente demande tout en respectant le positionnement de la voie tel que défini à l'édition de l'épure.

On peut ainsi réaliser une forme de base absolue stricte mais sans utilisation du dressage avec référence au piquetage. A la différence de ce qui se pratiquait avec la méthode de dressage avec référence au piquetage, il suffisait de mettre la voie bonne au repère après avoir rectifié le piquetage. Ici, il convient d'étudier la rectification du tracé plan avec le double objectif de respecter les valeurs de flèches et dévers à chaque borne (telles que données dans l'épure issue du procédé décrit), (et les valeurs $E_m$ et Z si double voie au moins), mais aussi les cotes L et h au droit des obstacles.

Le procédé par les avantages qu'il confère, notamment en affranchissant de revenir aux méthodes de dressage avec référence au piquetage, trop lourdes à remettre en place dans le contexte conjoncturel actuel, peut avantageusement être appliqué systématiquement lors des Grandes Opérations Programmées que sont les opérations de Renouvellement de Voie et Ballast par les techniques dites de Suite Rapide (unités mécanisés avec 2 trains usines) ou de Hors Suite (avec engins de chantier type BTP).

Ainsi, une nouvelle épure est créée et une situation nouvelle, permettant de contraindre le calage longitudinal et latéral des courbes est possible via la localisation et synchronisation systématique des points fixes (dont obligés) et la mesure de leur position par rapport à la voie.

**Revendications**

1. Procédé de caractérisation du tracé plan et profil transversal d'une voie ferrée et de la position de points obligés à la voie ferrée, pour la constitution de données d'entrée à un procédé de rectification de tracé de ligne de la voie ferrée, comportant les étapes de :

    - obtention d'un diagramme de flèches représentatif du tracé plan de la voie ferrée à caractériser,
    - identification et définition du ou des chaînages du diagramme de flèches,
    - pour chaque chaînage défini, détermination d'un bornage théorique,
    - pour chaque chaînage crée, représentation physique du bornage théorique sur la voie ferrée à analyser,
    - mesure de flèches, de dévers et de distance le long du rail, couplée à une synchronisation spatiale du bornage et de points fixes rencontrés le long de la voie ferrée à analyser,
    - mesure de distances horizontales L et verticales h de points obligés à la voie ferrée.

2. Procédé selon la revendication 1 comportant une étape ultérieure de mise en forme des mesures dans un formalisme compatible avec un procédé de rectification de tracé de ligne de la voie ferrée.

3. Procédé selon l'une des revendications précédentes dans lequel les mesures sont réalisées à partir d'un dispositif de mesure unique mesurant en continu les flèches, les dévers, les distances parcourues le long du rail distances horizontales et verticales de points obligés à la voie ferrée, avec une synchronisation spatiale du bornage et des points fixes,.

4. Procédé selon l'une des revendications précédentes comportant une mesure des entraxes $E_m$ et différences d'altitudes Z entre files hautes, lorsque la voie ferrée fait partie d'une plateforme à plusieurs voies ferrées.

5. Procédé selon l'une des revendications précédentes dans lequel le diagramme de flèches est obtenu à partir d'une base de données existante.

6. Procédé selon l'une des revendications précédentes dans lequel la représentation physique du bornage est réalisée par un marquage sur un rail de la voie ferrée.

7. Procédé de renouvellement du tracé plan mettant en oeuvre un procédé conforme à l'une des revendications 1 à 6 et comportant une étape de fourniture d'une nouvelle base de données comportant les valeurs de flèches base 20m, les dévers, au droit de bornes nouvellement définies ainsi que les distances horizontales L et verticales h des points obligés à la file de rail la plus proche avec synchronisation spatiale des valeurs avec les points fixes en vue de servir de référence pour les rectifications de tracé dans le cadre d'une maintenance.

Fig. 1

## Fig. 2

## Fig. 3

Fig. 4

EP 3 021 075 A1

Europäisches Patentamt
European Patent Office
Office européen des brevets

# RAPPORT DE RECHERCHE EUROPEENNE

Numéro de la demande

EP 15 19 4677

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Ralph Glaus: "Kinematic track surveying by means of a multi-sensor platform", Dr. Alain Geiger, 2006, XP055199621, DOI: 10.3929/ethz-a-005168061 Extrait de l'Internet: URL:http://dx.doi.org/10.3929/ethz-a-005168061 [extrait le 2015-07-02] * abrégé * * page 3 - page 47 * | 1-7 | INV. G01B21/20 B61K9/08 E01B35/00 |
| A | Stéphanie Beets: "Bilan d'un levé de ligne à grande vitesse par profilomètre ferroviaire", XYZ, 2001, pages 25-31, XP055199552, Extrait de l'Internet: URL:www.aftopo.org/download.php?matricule=38806 [extrait le 2015-07-01] * le document en entier * | 1-7 | |
| A | US 2014/200827 A1 (BHATTACHARJYA DEBARUN [US] ET AL) 17 juillet 2014 (2014-07-17) * alinéa [0018] - alinéa [0047]; figures 1-3 * | 1-7 | DOMAINES TECHNIQUES RECHERCHES (IPC) G01B B61K E01B |
| A | GB 2 424 948 A (ROBINSON STUART CONNOR [GB]; ROBINSON MARK CAMPBELL [GB]) 11 octobre 2006 (2006-10-11) * page 1, ligne 5 - page 4, ligne 26 * | 1-7 | |

Le présent rapport a été établi pour toutes les revendications

| Lieu de la recherche | Date d'achèvement de la recherche | Examinateur |
|---|---|---|
| Munich | 31 mars 2016 | Petelski, Torsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 15 19 4677

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2016

| Document brevet cité au rapport de recherche | Date de publication | Membre(s) de la famille de brevet(s) | Date de publication |
|---|---|---|---|
| US 2014200827 A1 | 17-07-2014 | US 2014200827 A1 | 17-07-2014 |
| | | US 2014200828 A1 | 17-07-2014 |
| | | US 2014200829 A1 | 17-07-2014 |
| | | US 2014200830 A1 | 17-07-2014 |
| | | US 2014200869 A1 | 17-07-2014 |
| | | US 2014200870 A1 | 17-07-2014 |
| | | US 2014200872 A1 | 17-07-2014 |
| | | US 2014200873 A1 | 17-07-2014 |
| | | US 2014200951 A1 | 17-07-2014 |
| | | US 2014200952 A1 | 17-07-2014 |
| | | WO 2014110099 A2 | 17-07-2014 |
| GB 2424948 A | 11-10-2006 | AUCUN | |

EPO FORM P0460

Pour tout renseignement concernant cette annexe : voir Journal Officiel de l'Office européen des brevets, No.12/82

**EP 3 021 075 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1450897